**Europäisches Patentamt**

**European Patent Office**

**Office européen des brevets**

(19)

(11) Veröffentlichungsnummer : **0 057 845**
**B1**

(12)

# EUROPÄISCHE PATENTSCHRIFT

(45) Veröffentlichungstag der Patentschrift :
01.10.86

(21) Anmeldenummer : 82100484.3

(22) Anmeldetag : 25.01.82

(51) Int. Cl.⁴ : **C 08 F 279/02, C 08 F 265/04,
C 08 F 2/14**

(54) Verfahren zur Herstellung von Pfropfpolymerisaten.

(30) Priorität : 06.02.81 DE 3104101

(43) Veröffentlichungstag der Anmeldung :
18.08.82 Patentblatt 82/33

(45) Bekanntmachung des Hinweises auf die Patenterteilung : 01.10.86 Patentblatt 86/40

(84) Benannte Vertragsstaaten :
BE DE FR GB IT NL

(56) Entgegenhaltungen :
EP-A- 0 018 479
CHEMICAL ABSTRACTS, Band 83, Nr. 2, 14. Juli 1975,
Seite 115, Nr. 12403k, Columbus, Ohio, USA
Die Akte enthält technische Angaben, die nach dem
Eingang der Anmeldung eingereicht wurden und die
nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Korte, Siegfried, Dr.
Bamberger Strasse 6
D-5090 Leverkusen 1 (DE)
Erfinder : Lindner, Christian, Dr.
Riehler Strasse 200
D-5000 Koeln 60 (DE)
Erfinder : Süling, Carlhans, Dr.
Carl-Leverkus-Strasse 10
D-5068 Odenthal (DE)
Erfinder : Ott, Karl-Heinz, Dr.
Paul-Klee-Strasse 54
D-5090 Leverkusen 1 (DE)

**Beschreibung**

Die Erfindung betrifft ein Verfahren zur Herstellung von Pfropfpolymerisaten, insbesondere von ABS-Polymerisaten, im wesentlichen aus aliphatischen Kohenwasserstoffen bestehenden Reaktionsmedien. Dabei werden in einer Fällungspolymerisation Polymerisate hergestellt, die sich als Kunststoffe oder Kunststoffkomponenten mit guter Zähigkeit und Thermostabilität verwenden lassen.

ABS-Formmassen, d. h. Mischungen aus ABS-Pfropfpolymerisaten und thermoplastischen Harzen (« Zweiphasen-Kunststoffe ») kann man durch Polymerisation von Monomeren in Gegenwart von Kautschukemulsionen erhalten. Man muß dann die Polymerisate durch Koagulation aus der wäßrigen Emulsion isolieren. In dem sogenannten « Latex-Suspensions-Prozeß in Wasser » fallen ABS-Polymerisate zwar in Perlform aus dem wäßrigen Medium an, aber es sind Suspendiermittel erforderlich, die anwendungstechnische Eigenschaften der Polymerisate verschlechtern können (z. B. Rohton oder Härte).

Durch reine Substanzpolymerisation erhaltenes ABS hat bei hohen Kautschukgehalten unbefriedigende Oberflächeneigenschaften (mangelnden Glanz) oder schlechte Rohtonqualität. Die Substanzpolymerisation erfordert zudem großen technischen Aufwand.

Die Eigenschaften (z. B. die Kerbschlagzähigkeit) von ABS-Kunststoffen sind maßgeblich durch die Eigenschaften und Morphologie der ihnen zugrundeliegenden Kautschuke bestimmt. Wünschenswert sind Herstellverfahren, bei denen die Qualität der Kautschuke weniger kritisch ist.

Es wurde nun gefunden, daß man Pfropfcopolymerisate, insbesondere ABS- oder MBS-Kunststoffe, mit guten Eigenschaften durch Fällungspolymerisation aus aliphatischen Kohlenwasserstoffen herstellen und direkt aus dem Polymerisationsgemisch isolieren kann (z. B. durch Filtration oder Zentrifugation).

Aus der US-PS 3 095 388 ist bekannt, durch radikalische Polymerisation von Vinylmonomeren in Gegenwart von 0,1 bis 10 Gew.-% eines Kautschuks stabile Polymerisatdispersionen in einem organischen Medium, u. a. in aliphatischen Kohlenwasserstoffen, zu erzeugen. Das Verfahren ist jedoch auf unvernetzte, im Reaktionsmedium lösliche Kautschuke beschränkt und ergibt nicht sedimentationsfähige, stabile Organosole mit Teilchendurchmessern von nur 0,05 bis 2 μm.

Aus der DE-OS 1 645 101 ist bekannt, in aliphatischen Kohlenwasserstoffen stabile organische Dispersionen mit Teilchengrößen von 0,01 bis 2 μ durch radikalische Polymerisation von Vinylmonomeren in Gegenwart von Pfropfpolymeren mit speziellen Lösungs- bzw. Quelleigenschaften herzustellen.

Aus der EP 0 018 479 ist bekannt, daß man eine stabile, fließfähige Dispersion eines Kautschuks erhält, indem man eine wäßrige Emulsion des Kautschuks in einer organischen Flüssigkeit, die polymerisierbare Monomere enthält herstellt une die Monomeren polymerisiert.

Hierbei bildet sich aber nicht, jedenfalls nicht reproduzierbar, ein Pfropfpolymerisat, und dies auch nicht in Form eines ausfallenden Pulvers, sondern eine zusammenhängende Masse.

Gegenstand der Erfindung ist ein Verfahren zur Pfropfpolymerisation von

(A) 95 bis 40 Gew.-Tln. wenigstens eines ethylenisch ungesättigten Monomeren in Gegenwart von
(B) 5 bis 60 Gew.-Tln. eines parallel oder vollständig vernetzten Kautschuks,

das dadurch gekennzeichnet ist, daß man das oder die Monomeren (A) und den Kautschuk (B) als Partikel mit einem mittleren Durchmesser ($d_{50}$) von 0,05-2 μm in Form eines Latex oder einer Dispersion in einem organischen Lösungsmittel in einem aliphatischen Kohlenwasserstoff als Reaktionsmedium bei 40 bis 80 °C mit Hilfe eines radikalbildenden Initiators polymerisiert, und das als sedimentierende Suspension mit Teilchen eines mittleren Durchmessers von 5 bis 1 000 μm anfallende Pfropfpolymerisationsprodukt isoliert.

Die Kautschuke werden bevorzugt als wäßrige Latices mit Teilchen eines mittleren Durchmessers von größer als 0,05 μm und Feststoffgehalten größer 20 Gew.-% oder als Dispersionen in organischen Lösungsmitteln mit Teilchen eines mittleren Durchmessers von größer 0,05 μm und Feststoffgehalten größer 5 Gew.-% eingesetzt.

Mittlerer Teilchendurchmesser bedeutet hier und im folgenden immer den sogenannten $d_{50}$-Wert.

Die Polymerisation muß bis zu Umsätzen von mehr als 40 % geführt werden, damit sedimentationsfähige Suspensionen des gewünschten Teilchendurchmessers entstehen. Aus diesen Suspensionen kann das Pfropfprodukt durch Filtration oder Zentrifugieren leicht abgetrennt werden.

Von den Polymerisationsmonomeren werden mindestens 5 Gew.-%, vorzugsweise mindestens 15 Gew.-% auf den Kautschuk pfropfpolymerisiert ; die nicht gepfropften Anteile der gebildeten Copolymeren haben im allgemeinen Lösungsviskositäten [η] = 0,1 bis 5.

Das erfindungsgemäße Verfahren ist eine Art Fällungspolymerisation, d. h., die Polymerisate scheiden sich im Verlaufe der Umsetzung als gut filtrierbare Partikel aus den als Fällungsmedium dienenden aliphatischen Kohlenwasserstoffen ab. Das Verfahren kann diskontinuierlich, kontinuierlich, unter Druck, unter Rückfluß betrieben werden. Die Polymerisationstemperaturen sind bevorzugt 40 bis 80 °C.

Das Verfahren liefert primär Dispersionen von mit Kautschuk modifizierten Vinylpolymeren in einem überwiegend aus aliphatischen Kohlenwasserstoffen bestehenden Medium, in denen die Polymeren aus

# 0 057 845

10 bis 60 Gew.-% eines (teil)-vernetzten Kautschuks und aus 40 bis 90 Gew.-% eines durch radikalische Polymerisation aus einem oder mehreren Vinylmonomeren gebildeten Polymerisats bestehen, von dem mindestens 10 Gew.-% durch Pfropfung an den Kautschuk gekoppelt ist, und in denen die Teilchen aus Kautschuk und Vinylpolymerisat einen mittleren Durchmesser von 20 bis 500 μm aufweisen.

Die im Reaktionsmedium dominierenden aliphatischen Kohlenwasserstoffe können reine Stoffe mit definierten Siedepunkten zwischen —10 und 80 °C sein oder Gemische mit Siedepunkten zwischen —10 und 80 °C. Bevorzugt sind Butan, Pentan und Cyclohexan, sowie Petrolether mit Siedebereichen von 40 bis 80 °C oder 80 bis 110 °C.

Als Kautschuke kommen Polymerisate von Dienen und Acrylaten infrage, in denen bis zu 40 Gew.-% Comonomere, wie z. B. Styrol, Acrylnitril, Methylmethacrylat, Vinylether, -ester, sowie polyfunktionelle Vinyl- bzw. Allylmonomere eingebaut sein können, als Emulsion in Wasser (Latex) oder Dispersion in einem organischen Lösungsmittel. Die darin enthaltenen Kautschukpartikel haben mittlere Durchmesser von wenigstens 0,05 μm, vorzugsweise 0,1 bis 0,5 μm, besonders bevorzugt 0,3 bis 2 μm ; die Partikel sind partiell vernetzt oder hochvernetzt. Besonders geeignete Kautschuke sind Polybutadiene oder Butadien-Styrol- bzw. Acrylnitrilcopolymerisate, die wenigstens zu 40 Gew.-% vernetzt sind, vorzugsweise wenigstens zu 60 Gew.-%, sowie Polyalkylacrylat-Kautschuke, die eine teilchenförmige Struktur aufweisen und wenigstens zu 40 Gew.-% vernetzt sind, z. B. mittels polyfunktioneller Comonomere.

Zur Pfropfung eingesetzte ethylenisch ungesättigte Monomere sind z. B. Styrol, α-Methylstyrol, Alkylstyrole, (Meth)-Acrylnitril, Acrylsäureester und Methacrylsäureester mit bis zu 10 C-Atomen im Alkoholteil des Moleküls, Vinylester wie Vinylacetat, Maleinsäureanhydrid, Maleinimide, Zimtsäureester, Fumarsäureester oder Inden. Besonders bevorzugt sind Styrol, Mischungen aus Styrol und Acrylnitril im Gewichtsverhältnis 1 : 1 bis 10 : 1 und Methylmethacrylat. Man verwendet im allgemeinen 95 bis 40 Gew.-Teile Monomer und 5 bis 60 Gew.-Teile Kautschuk, vorzugsweise 90 bis 50 Gew.-Teile Monomer und 10 bis 50 Gew.-Teile Kautschuk.

Die Pfropfpolymerisation in den aliphatischen Kohlenwasserstoffen wird in Gegenwart von radikalischen Initiatoren bei Polymerisationstemperaturen von 40 bis 80 °C durchgeführt. Die Initiatoren besitzen eine Halbwertzeit des Zerfalls von 2 bis 30 Stunden. Beispiele sind : Cyclohexylpercarbonat, Isopropylpercarbonat, tert.-Butylperpivalat, tert.-Butylperoxi-2,4-dichlorphenoxiacetat, Acetylcyclohexansulfonperoxid.

Für manche Ausführungsform im Rahmen des erfindungsgemäßen Verfahrens bietet ein Redoxstartersystem aus einem organischen Hydroperoxid, $SO_2$ und einer löslichen organischen Säure Vorteile. Die optimale Wirksamkeit ist im Temperaturbereich von 30 bis 60 °C. Beim drucklosen Arbeiten können niedrigsiedende aliphatische Kohlenwasserstoffe als Polymerisationsmedium verwendet werden. Die Lösungsmittel können dann ohne großen Energieaufwand nahezu verlustfrei recyclisiert werden. Die niedrigen Reaktionstemperaturen verbessern die Qualität der anfallenden Polymerisate, insbesondere deren Rohton.

Es wird zu einem Umsatz von mindestens 40 % polymerisiert.

Übliche Zusätze, z. B. Regler (wie Mercaptane, Allylverbindungen), oberflächenaktive Substanzen, Suspendiermittel (insbesondere in organischen Medien wirksame) können verwendet werden. Die radikalischen Initiatoren werden vorzugsweise in Mengen von 0,1 bis 5 Gew.-%, bezogen auf Monomere, eingesetzt.

Es gibt mehrere Möglichkeiten, um den Kautschuk in das Polymerisationsmedium zu bringen.

Bei der halbkontinuierlichen Arbeitsweise startet man die Polymerisation in einem Gemisch aus aliphatischem Kohlenwasserstoff, Monomeren und Kautschukdispersion und fügt im Verlaufe der Umsetzung Monomere und gegebenenfalls Kautschukdispersion zu. In einer bevorzugten Ausführungsform kombiniert man wäßrige und organische Kautschukdispersionen, insbesondere, um große Kautschukmengen einzupolymerisieren. Für den Verfahrensablauf und für die Eigenschaften der Produkte ist es günstig, den Kautschuk als organische Dispersion vorzulegen und weitere Mengen als wäßrige Dispersion zuzufügen.

Bei kontinuierlicher Polymerisation beträgt die Verweilzeit normalerweise 0,5 bis 10 Stunden bei gleichlaufender Dosierung aller Komponenten und bei gleichzeitigem Austrag einer entsprechenden Menge des gebildeten Pfropfpolymerisats.

Die erfindungsgemäß erhaltenen Pfropfpolymerisate lassen sich nach Filtration, gegebenenfalls Wäsche und Trocknung, als Pulver mit Teilchen eines mittleren Durchmessers von 5-1 000 μm isolieren.

Es ist auch möglich, das Polymerisat direkt in eine zur Verarbeitung geeignete Form zu überführen. Dazu wäscht man den noch aliphatischen Kohlenwasserstoff und nichtumgesetztes Monomer enthaltenden feuchten Filterkuchen, gegebenenfalls unter Druck, mit einer niedrigsiedenden, das Polymere nicht lösenden organischen Flüssigkeit, überführt den so vorbehandelten Filterkuchen in einen Verdampfer, trennt darin die Waschflüssigkeit und Restmonomere ab und verdichtet gleichzeitig das Polymerisat auf eine für die thermoplastische Verarbeitung geeignete Form (z. B. Granulat). Als Verdampfer eignen sich z. B. Eindampfschnecken und Innenkneter mit nachgeschaltetem Granulator. Auf energieintensives Trocknen kann verzichtet werden. Das erfindungsgemäße Verfahren bietet in allen Ausführungsformen die Möglichkeit, alle Komponenten zu recyclisieren.

Die erfindungsgemäß hergestellten Pfropfpolymerisate können für sich allein als thermoplastische Formmassen verwendet werden ; sie stellen — wegen der nie vollständigen Pfropfung — Gemische aus

3

den eigentlichen Pfropfpolymerisaten (Polymerisat der Monomeren chemisch an den Kautschuk gebunden) und aus freien (Co)Polymerisaten der der Monomeren dar. Diese (Co)Polymerisate sind thermoplastische Harze. Man kann weitere solcher Harze auch den Pfropfpolymerisaten nachträglich zumischen in Mengen bis zu 95 Gew.-%, bezogen auf Gesamtmischung. Man kann den erfindungsgemäß erhaltenen Pfropfpolymerisaten oder auch ihren Mischungen mit thermoplastischen Harzen noch weitere Pfropfcopolymerisate zufügen. Dafür kommen insbesondere in Emulsion hergestellte Pfropfprodukte in Styrol, Gemischen aus Styrol und Acrylnitril, bevorzugt im Gew.-Verhältnis 90 : 10 bis 50 : 50, Gemischen aus Styrol und Methylmethacrylat, sowie Styrol-Acrylnitril-Methylmethacrylat in Betracht. Als Pfropfbasis fungieren dabei bevorzugt Polybutadien-, Butadien/Acrylnitril- und Butadien/Styrol-Polymerisate, sowie Butadien-Styrol-Blockcopolymerisate. Ebenfalls verwendbar sind Acrylsäureester-Copolymerisate, sowie EPDM-Terpolymerisate. Solche Pfropfprodukte sind bekannt.

Das thermoplastische Harz bildet normalerweise zusammen mit dem freien (Co)Polymerisat aus der Pfropfcopolymerisation eine kontinuierliche Phase (Matrix). Es ist bevorzugt ein Polymerisat von Styrol, α-Methylstyrol, Acrylnitril, Methylmethacrylat und Maleinsäureanhydrid. Bevorzugt sing Polystyrol, Styrol-Acrylnitril-Copolymere mit Acrylnitrilgehalten von 20 bis 35 Gew.-%, sowie α-Methylstyrol-Acrylnitri-l-Copolymere mit Acrylnitrilgehalten von 20 bis 31 Gew.-%.

Wird nur ein Pfropfprodukt zur Herstellung der Formmasen verwendet, so ist es vorteilhaft, wenn die quantitative Zusammensetzung der Pfropfmonomeren und die der das Harz bildenden Monomeren weitgehend übereinstimmen. Verwendet man zwei Pfropfprodukte, so ist es vorteilhaft, wenn das Mengenverhältnis der Styrol- und Acrylnitrilteile im Polymerisat der Pfropfhülle der grobteiligeren Pfropfkomponente von dem des Harzes abweicht.

Die Styrol- bzw. α-Methylstyrol-Acrylnitril-Copolymerisate sind bekannt.

Erfindungsgemäß werden Pfropfcopolymerisate und thermoplastische Kunststoffe schnell une energiesparend hergestellt ; die daraus durch thermoplastische Verarbeitung hergestellten Formkörper besitzen sehr gute Oberflächeneigenschaften und hervorragende Zähigkeiten.


Beispiele

1. Herstellung der erfindungsgemäßen Pfropfcopolymere

Beispiel 1

In einem Rührkessel werden vorgelegt :

|  | Gewichtsteile | | |
| --- | --- | --- | --- |
|  | (A) | (B) | (C) |
| Ligroin (Kp.80-110°C) | 350 | 350 | 350 |
| Styrol | 118 | 105 | 92 |
| Acrylnitril | 46 | 41 | 36 |
| tert.-Butylperpivalat | 5,5 | 5,0 | 4,5 |
| Dispergator SKG | 4,5 | 4,5 | 4,5 |

Unter intensivem Rühren wird eine wäßrige Polybutadien-Emulsion (49 Gew.-%ig, vernetzt, mittlerer Teilchendurchmesser 400 nm) zugefügt :

| Gewichtsteile | | |
| --- | --- | --- |
| (A) | (B) | (C) |
| 19,0 | 38,0 | 57,0 |

Nach Temperieren des Reaktorinhalts auf 60 °C werden innerhalb der angegebenen Zeitspannen gleichmäßig dosiert :

|  | Gewichtsteile | | |
|---|---|---|---|
|  | (A) | (B) | (C) |
| **Lösung I** (6,5 Stunden) | | | |
| Ligroin (Kp.80-110°C) | 800 | 800 | 800 |
| tert.-Butylperpivalat | 8,5 | 7,5 | 6,5 |

|  | Gewichtsteile | | |
|---|---|---|---|
|  | (A) | (B) | (C) |
| **Lösung II** (6 Stunden) | | | |
| Ligroin (Kp. 80-110°C) | 122 | 143 | 165 |
| Styrol | 176 | 157 | 137 |
| Acrylnitril | 70 | 62 | 55 |
| **III Polybutadien-Emulsion** (6 Stunden) | | | |
| (49 Gew.-%ig, vernetzt, | | | |
| mittlerer Teilchendurchmesser | 75 | 150 | 225 |
| (400 nm) | | | |

Aus den anfallenden grobteiligen Dispersionen werden die Styrol/Acylnitril-Pfropfpolymeren abfiltriert, mit Alkohol gewaschen, und getrocknet:

|  | Gewichtsteile | | |
|---|---|---|---|
|  | (A) | (B) | (C) |
| **Umsatz** (Gew.-%) | | | |
| bezogen auf eingesetzte | 76,3 | 71,8 | 69,4 |
| Monomere | | | |
| **Zusammensetzung** (Gew.-%) | | | |
| Styrol | 60,2 | 51,2 | 41,4 |
| Acrylnitril | 27,0 | 22,8 | 20,2 |
| Polybutadien-Kautschuk | 12,8 | 26,0 | 38,4 |
| **Pfropfgrad** (Gew.-%) | | | |
| bezogen auf eingebaute | 28,5 | 43,1 | 50,2 |
| Monomere | | | |
| **Gelgehalt** (Gew.-%) | 37,7 | 57,9 | 69,3 |
| $[\eta]^{THF}_{sol}$ (dl/g) | 1,2 | 1,06 | 1,05 |

## Beispiel 2

Arbeitsweise wie in Beispiel 1

| | Gewichtsteile | | |
|---|---|---|---|
| | (A) | (B) | (C) |
| **Vorlage:** | | | |
| Ligroin (Kp.80-110°C) | 336 | 336 | 291 |
| Styrol | 80 | 80 | 117,5 |
| Acrylnitril | 32 | 32 | 39,5 |
| tert.-Butylperpivalat | 3,5 | 3,5 | 5,0 |
| Dispergator SKG | 3,5 | 3,5 | 4,5 |
| Polybutadien-Emulsion (49 Gew.-%ig, vernetzt, mittlerer Teilchendurch-messer: 400 nm) | 65 | – | – |
| Polybutadien-Emulsion (35,6 Gew.-%ig, vernetzt, mittlerer Teilchendurch-messer: 100 nm) | – | 89,5 | – |
| Acrylatkautschuk-Emulsion (38 Gew.-%ig, vernetzt, mittlerer Teilchendurch-messer: 500 nm) | – | – | 86 |

Temperatur:  60°C

**Zudosiert:**

Lösung I (6,5 Stunden)

| | (A) | (B) | (C) |
|---|---|---|---|
| Ligroin (Kp.80-110°C) | 800 | 800 | 800 |
| tert.-Butylperpivalat | 5,0 | 5,0 | 7,1 |

Lösung II (6 Stunden)

| | (A) | (B) | (C) |
|---|---|---|---|
| Ligorin (Kp.80-110°C) | 215 | 215 | 162 |
| Styrol | 97 | 97 | 145,5 |
| Acrylnitril | 40 | 40 | 48,5 |
| Ligorin (Kp.80-110°C) | 215 | 215 | 162 |
| Styrol | 97 | 97 | 145,5 |
| Acrylnitril | 40 | 40 | 48,5 |

| | Gewichtsteile | | |
|---|---|---|---|
| | (A) | (B) | (C) |
| **III Kautschuk-Emulsion (6 Stunden)** | | | |
| Polybutadien-Emulsion (49 Gew.-%ig, vernetzt, mittlerer Teilchendurchmesser: 400 nm) | 350 | – | – |
| Polybutadien-Emulsion (35,6 Gew.-%ig, vernetzt, mittlerer Teilchendurchmesser: 100 nm) | – | 482 | – |
| Acrylat-Kautschuk-Emulsion (38 Gew.-%ig, vernetzt, mittlerer Teilchendurchmesser: 500 nm) | – | – | 464 |

Die nach Filtration, Wäsche und Trocknung anfallenden Styrol/Acrylinitril-Pfropfpolymeren sind wie folgt charakterisiert :

| | Gewichtsteile | | |
|---|---|---|---|
| | (A) | (B) | (C) |
| **Umsatz (Gew-.-%)** (bezogen auf eingesetzte Monomere) | 67,7 | 60,1 | 74,3 |
| **Zusmmensetzung (Gew.-%)** | | | |
| Styrol | 29,9 | 27,5 | 39,4 |
| Acrylnitril | 15,5 | 14,9 | 16,15 |
| Kautschuk | 54,6 | 57,6 | 44,45 |
| **Pfropfgrad (Gew.-%)** (bezogen auf eingebaute Monomere) | 44,0 | 33,5 | 11,9 |
| **Gelgehalt (Gew.-%)** | 74,6 | 71,8 | 51,1 |
| $[\eta]^{THF}_{sol}$ (dl/g) | 0,828 | 1,09 | 1,15 |

7

Beispiel 3

In einem Rührkessel werden vorgelegt :

| | |
|---|---|
| Ligroin (Kp. 80-110 °C) | 291 Gew.-Tle. |
| α-Methylstyrol | 108,5 Gew.-Tle. |
| Acrylnitril | 48,5 Gew.-Tle. |
| tert.-Butylperpivalat | 5 Gew.-Tle. |
| Dispergator SKG | 4,5 Gew.-Tle. |

Unter intensivem Rühren werden 65 Gew.-Tle. einer wäßrigen Polybutadien-Emulsion (49 Gew.-%ig, vernetzt, mittlerer Teilchendurchmesser : 400 nm) zugefügt. Nach Temperieren des Reaktorinhalts auf 70 °C werden bei reduzierten Rührerdrehzahl innerhalb der gennanten Zeitspannen gleichmäßig zudosiert :

| | |
|---|---|
| Lösung I (6,5 Stunden) | |
| Ligroin (Kp. 80-110 °C) | 800 Gew.-Tle. |
| tert.-Butylperpivalat | 7,1 Gew.-Tle. |
| | |
| Lösung II (6 Stunden) | |
| Ligorin (Kp. 80-110 °C) | 170 Gew.-Tle. |
| α-Methylstyrol | 134 Gew.-Tle. |
| Acrylnitril | 60 Gew.-Tle. |

III Polybutadien-Emulsion (6 Stunden)
(49 Gew.-%ig, vernetzt, mittlerer 350 Gew.-Tle. Teilchendurchmesser : 400 nm)

Aus der anfallenden grobteiligen Dispersion wird das α-Methylstyrol/Acrylnitril-Propfpolymer abfiltriert, mit Alkohol gewaschen und getrocknet.

Umsatz (Gew.-%)
(bezogen auf eingesetzte Monomere) 61,5

| | |
|---|---|
| Zusammensetzung (Gew.-%) | |
| α-Methylstyrol | 33,05 |
| Acrylnitril | 18,5 |
| Polybutadien-Kautschuk | 48,45 |
| | |
| Pfropfgrad (Gew.-%) | |
| (bezogen auf eingebaute Monomere) | 10,5 |
| | |
| Gelgehalt (Gew.-%) | 53,9 |
| $[n]^{THF}_{sol}$ (dl/g) | 0,63 |

Beispiel 4

a) Herstellung einer organischen Polybutadien-Dispersion

Durch intensives Mischen von

| | Gew.-Teile |
|---|---|
| Petrolether (Kp. 60-70 °C) | 600 |
| Styrol | 273 |
| Acrylnitril | 107 |
| Polybutadien-Emulsion | 200 |
| (wäßrig, 49 Gew.-%ig, mittlerer | |
| Teilchendurchmesser : 400 nm) | |
| Essigsäure | 2 |

wird eine stabile Polybutadiendispersion (8,2 Gew.-% Polybutadien, mittlerer Teilchendurchmesser : 400 nm) erhalten.

b) Pfropfpolymerisation mit Cumolhydroperoxid/$SO_2$/Trichloressigsäure-Katalysator

0 057 845

In einem Rührkesel werden vorgelegt :

| | |
|---|---|
| Petrolether | 125 |
| Polybutadien-Dispersion (gem. 4a) | 300 |
| Trichloressigsäure | 0,5 |
| Cumolhydroperoxid | 1,2 |

Nach Temperieren des Reaktorinhalts auf 50 °C werden zum Sart 25 Gew.-Tle. der Lösung II zugefügt und dann innerhalb der genannten Zeitspannen gleichmäßig zudosiert :

Gew.-Teile

| | |
|---|---|
| Lösung I (7 Stunden) | |
| Petrolether (Kp. 60-70 °C) | 635 |
| Acrylnitril | 65 |
| Styrol | 66 |
| n-Dodecylmercaptan | 0,6 |

Gew.-Teile

| | |
|---|---|
| Lösung II (7 Stunden) | |
| Petrolether (Kp. 60-70 °C) | 220 |
| Acrylnitril | 39 |
| Styrol | 100 |
| Schwefeldioxid | 7,5 |

| | |
|---|---|
| Lösung III (7 Stunden) | |
| Petrolether (Kp. 60-70 °C) | 230 |
| Styrol | 100 |
| Cumolhydroperoxid | 4,5 |

| | |
|---|---|
| IV Polybutadien-Dispersion (7 Stunden) (gemäß 4a) | 365 |

Aus der anfallenden grobteiligen Dispersion wird ein wie folgt charakterisiertes Styrol/Acrylnitril-Pfropfpolymerisat abfiltriert :

| | |
|---|---|
| Umsatz (Gew.-%) (bezogen auf eingesetzte Monomere) | 65,3 |

| | |
|---|---|
| Zusammensetzung (Gew.-%) | |
| Styrol | 58,7 |
| Acrylnitril | 28,7 |
| Polybutadien-Kautschuk | 12,6 |

Gew.-Teile

| | |
|---|---|
| Pfropfgrad (Gew.-%) (bezogen auf eingebaute Monomere) | 15,4 |

| | |
|---|---|
| Gelgehalt (Gew.-%) | 26,0 |
| $[\eta]^{THF}$ | 1,08 |
| sol (dl/g) | |

## Beispiel 5

a) Herstellung von organischen Polybutadien-Dispersionen

Mit einem, starke Turbulenz erzeugenden Rührer werden gemischt :

Gew.-Teile

| Polybutadien-Dispersion | $P_1$ | $P_2$ |
|---|---|---|
| Ligroin (Kp. 80-110 °C) | 555 | 555 |
| Styrol | 252 | 252 |

9

|  | Gew.-Teile | |
|---|---|---|
| Acrylnitril | 99 | 99 |
|  | 11 | 11 |
| Polybutadien-Emulsion (wäßrig, 49 gew.-%ig, Teilchengröße : 400 nm) | 187,5 | — |
| Polybutadien-Emulsion (wäßrig, 35,5 gew.-%ig, Teilchengröße : 100 nm) | — | 258 |
| Zephirol-Lösung (50 %ig) | 7,0 | 7,0 |

und die Polybutadien-Dispersionen $P_1$ und $P_2$ erhalten.
Nach Phasentrennung werden aus der Dispersion $P_1$
92 Gew.-Teile und aus der Dispersion $P_2$
161 Gew.-Teile Wasser abgetrennt.

b) Pfropfpolymerisation unter Verwendung von organischen und wäßrigen Polybutadien-Dispersionen

In einem Rührkessel werden vorgelegt :

|  | Gew.-Teile | | | |
|---|---|---|---|---|
|  | (A) | (B) | (C) | (D) |
| Ligroin (Kp. 80-110°C) | 160 | 160 | 160 | 160 |
| tert.-Butylperpivalat | 3,5 | 3,5 | 3,5 | 3,5 |
| Dispersion $P_1$ (9 Gew.-%ig, mittlerer Teilchendurchmesser: 100 nm) | 350 | - | 350 | - |
| Dispersion $P_2$ (9 Gew.-%ig, mittlerer Teilchendurchmesser: 100 nm) | - | 350 | - | 350 |

Nach Temperieren des Reaktors auf 60 °C und Beginn der Polymerisation werden innerhalb der genannten Zeitspannen gleichmäßig dosiert :

|  | Gew.-Teile | | | |
|---|---|---|---|---|
|  | (A) | (B) | (C) | (D) |
| Lösung I (5,5 Stunden) | | | | |
| Ligroin (Kp. 80-110°C) | 800 | 800 | 800 | 800 |
| tert.-Butylperpivalat | 3,75 | 3,75 | 3,75 | 3,75 |
| Dispersion II (5 Stunden) | | | | |
| $P_1$ (9 Gew.-%ig, Teilchengröße: 400 nm) | 425 | - | 425 | - |
| $P_2$ (9 Gew.-%ig, Teilchengröße: 100 nm) | - | 425 | - | 425 |

|  | Gew.-Teile | | | |
|---|---|---|---|---|
|  | (A) | (B) | (C) | (D) |

Dispersion III (5 Stunden)

|  | (A) | (B) | (C) | (D) |
|---|---|---|---|---|
| Polybutadien-Emulsion (wäßrig, 49 Gew.-%ig, Teilchengröße: 400 nm) | 270 | – | 110 | |
| Polybutadien-Emulsion (wäßrig, 35,5 Gew.-%ig, Teilchengröße: 100 nm) | – | 372 | – | 150 |

Aus den anfallenden grobteiligen Dispersionen werden pulverförmige Pfropfpolymerisate abfiltriert, mit Ethanol gewaschen und getrocknet, mit folgenden Eigenschaften :

|  | (A) | (B) | (C) | (D) |
|---|---|---|---|---|
| Umsatz (Gew.-%) (bezogen auf eingesetzte Monomere) | 61,8 | 55,9 | 66,1 | 64,1 |
| Zusammensetzung (Gew.-%) | | | | |
| Styrol | 29,5 | 28,8 | 40,2 | 40,8 |
| Acrylnitril | 15,45 | 13,7 | 18,7 | 17,2 |
| Polybutadien-Kautschuk | 55.,05 | 57,5 | 41,1 | 42,0 |
| Pfropfgrad (Gew.-%) (bezogen auf eingebaute Monomere) | 41,4 | 31,3 | 42,7 | 31,7 |
| Gelgehalt (Gew.-%) | 73,4 | 70,8 | 66,3 | 60,4 |
| $[\eta]^{THF}_{sol}$ (dl/g) | 0,95 | 1,08 | 1,07 | 1,03 |
| Teilchengröße (µm) | 120 | 105 | 95 | 120 |

II. Herstellung von thermoplastischen Formmassen aus den in I. beschriebenen Pfropfcopolymerisaten, gegebenenfalls kombiniert mit Styrol/Acrylnitril-Harz.

**0 057 845**

Tabelle 1

Styrol-Acrylnitril-Copolymer

| Bezeichnung | Copolymer-Zusammensetzung Styrol:Acrylnitril (Gew.-%) | Viskosität[1] $\eta_{spez}/C$ | Molekulare Uneinheitlichkeit[2] $U_n$ |
|---|---|---|---|
| S | 70:30 | 110 | 2,5 |

1) Viskosität, gemessen bei C = 5 g/l in Methylethylketon bei 25 °C

2) $U_n = \dfrac{M_w}{M_n} - 1$ (M_w = Gewichtsmittel der Molmasse ; M_n = Zahlenmittel der Molmasse)

Es wurde ein Banbury-Mixer (Pomini-Farrel) bei den folgenden Arbeitsbedingungen benutzt :

Massetemperatur : 190-225 °C
Mischzeit : 1,5-2 Min.
Cycluszeit : 2-4 Min.

Nach dem Mischen fällt das Material als plastische Masse auf einen Zweiwellenstuhl (Walze 1 T = 160 °C, Walze 2 T = 150 °C), wird in Form eines Bandes abgenommen, und nach Abkühlung granuliert.

2) Prüfmethodik

Aus dem Granulat werden durch Spritzguß bei 220 °C Normkleinstäbe hergestellt. Diese werden nach DIN-Methoden zur Ermittlung der Kerbschlagzähigkeit, Schlagzähigkeit, Härte und Wärmestandfestigkeit nach Vicat B geprüft. Die Verarbeitbarkeit wird mit dem Flachspiraltest nach H, Ebneth, K. Böhm : Fließfähigkeit von ABS-Polymerisaten ; Plastverarbeiter 19 (1968) 4, S. 261-269, bei 220 °C geprüft.

(Siehe Tabellen Seite 13 ff.)

12

Tabelle 2

Zusammensetzung der Formmassen

| Beispiele | Pfropfcopolymer aus Beispiel (Gew.-Teile) | | Harzpolymer gem. Tabelle 1 (Gew.-Teile) | | Gleimittel (Gew.-Teile) |
|---|---|---|---|---|---|
| II. 2. 1. | 100 | I.1.A | – | | 2 AC[1] |
| II. 2. 2. | 100 | I.4.b | – | | " |
| II. 2. 3. | 1071 | I.2.A | 1929 | S | " |
| II. 2. 4. | 535 | I.2.B | 2465 | S | " |
| II. 2. 5. | 731 | I.5.b.C. | 2269 | S | " |
| II. 2. 6. | 731 | I.5.b.D. | 2269 | S | " |

[1] AC = Bisstearylamid des Ethylendiamins

## Tabelle 3

### Eigenschaften der Formmassen

| Beispiele | Kerbschlagzähigkeit | Kugeleindruckhärte | Wärmestandfestigkeit | Fließlänge an Flachspirale (cm) bei |
|---|---|---|---|---|
| | $23°C$, $kJ/m^2$ | 30 s | Vicat B ($°C$) | $220°C$ |
| II. 2. 1. | 21 | 102 | 102 | 29 |
| II. 2. 2. | 21 | 109 | 102 | 28 |
| II. 2. 3. | 18 | 69 | 88 | 35 |
| II. 2. 4. | 11 | 107 | 91 | 41 |
| II. 2. 5. | 11 | 109 | 91 | 42 |
| II. 2. 6. | 13 | 108 | 90 | 43 |

Tabelle 3 zeigt, daß aus Pfropfcopolymerisaten, die nach dem erfindungsgemäßen Verfahren hergestellt wurden, Formmassen mit besonders guten mechanischen Eigenschaften erhalten werden ; sogar aus feinteiligem Kautschuk (Beispiel II. 2.4) werden Formmassen erhalten, deren Kerbschlagzähigkeit besser ist als nach dem Stand der Technik zu erwarten war.

Anhang

Dispergator SKG
Umsetzungsprodukte von Maleinsäureanhydrid-1-Olefin-Copolymere mit höheren Alkanolen (siehe G. Sackmann und a. Angew. Makromol. Chem. 69 (1978), Nr. 1041, S. 141).

Die mittleren Teilchendurchmesser von Emulsionen wurden mittels Lichtstreuungsmessungen bzw. Ultrazentrifugenmessungen ermittelt ; die Teilchengrößen der Dispersionen wurden lichtmikroskopisch ermittelt.

Pfropfgrade wurden nach M. Hoffmann u. a. « Polymeranalytik » bestimmt, Georg-Thieme-Verlat (1977).

[n]-Werte sind Staudinger-Indices, gemessen in dem jeweils angegebenen Lösungsmittel in dl/g, von Polymeren bzw. von löslichen Polymeranteilen von Pfropfpolymeren (sol).

**Patentanspruch**

Verfahren zur Pfropfpolymerisation von

(A) 95-40 Gew.-Teilen wenigstens eines ethylenisch ungesättigten Monomeren in Gegenwart von
(B) 5-60 Gew.-Teilen eines partiell oder vollständig vernetzten Kautschuks,

dadurch gekennzeichnet, daß man das oder die Monomeren (A) und den Kautschuk (B) in Form eines Latex oder einer Dispersion in einem organischen Lösungsmittel mit Kautschukpartikeln eines mittleren Durchmessers von 0,05-2 μm in einem aliphatischen Kohlenwasserstoff mit Siedepunkten von — 10 bis + 80 °C als Reaktionsmedium bei 40-80 °C mit Hilfe eines radikalischen Initiators mit einer Halbwertzeit von 2 bis 30 Stunden oder eines Redoxkatalysators aus organischem Hydroperoxid, $SO_2$ und einer löslichen organischen Säure bis zu einem Umsatz von mindestens 40 % polymerisiert und das als sedimentierende Suspension mit Teilchen eines mittleren Durchmessers von 5-1 000 μm ausfallende Pfropfpolymerisationsprodukt isoliert.

**Claim**

Process for the graft polymerisation of

(A) 95-40 parts by weight of at least one ethylenically unsaturated monomer in the presence of
(B) 5-60 parts by weight of a partially or completely cross-linked rubber,

characterised in that the monomer(s) (A) and the rubber (B) in the form of a latex or a dispersion in an organic solvent containing rubber particles of an average diameter of 0.05-2 μm are polymerised in an aliphatic hydrocarbon having boiling points of — 10 to + 80 °C as the reaction medium at 40-80 °C with the aid of a radical initiator having a half-life of 2 to 30 hours or a redox catalyst of an organic hydroperoxide, $SO_2$ and a soluble organic acid up to a conversion of at least 40 % and the graft polymerisation product obtained in the form of a sedimenting suspension containing particles of an average diameter of 5-1 000 μm is isolated.

**Revendication**

Procédé de polymérisation de greffage de :

(A) 95 à 40 parties en poids d'au moins un monomère à insaturation éthylénique en présence de
(B) 5 à 60 parties en poids d'un caoutchouc partiellement ou entièrement réticulé,

procédé caractérisé en ce qu'on polymérise le ou les monomère(s) A et le caoutchouc (B) sous forme d'un latex ou d'une dispersion dans un solvant organique, comportant des particules de caoutchouc ayant un diamètre moyen de 0,05 à 2 μm, dans un hydrocarbure aliphatique dont les points d'ébullition se situent entre — 10 et + 80 °C comme milieu de réaction, à 40-80 °C à l'aide d'un amorceur générateur de radicaux dont la période de demi-vie est de 2 à 30 h, ou d'un catalyseur Redox formé d'un hydroperoxyde organique, de $SO_2$ et d'un acide organique soluble, jusqu'à un taux de réaction de polymérisation d'au moins 40 %, et en ce qu'on isole le produit de la réaction de polymérisation de greffage se présentant sous forme d'une suspension en cours de sédimentation ayant des particules dont le diamètre moyen est de 5 à 1 000 μm.